# EUROPEAN PATENT APPLICATION

(11) **EP 4 768 748 A1**
(43) Date of publication of application: **01.07.2026**
(21) Application number: 24223741.0
(22) Date of filing: 30.12.2024
(51) Int. Cl.: F16D 63/00, E05C 17/20, F16D 121/14

(54) **DOOR BRAKE**

(71) Applicant: Volvo Truck Corporation, 405 08 Göteborg (SE)
(72) Inventor: HERVIEUX, Jeremy, 69008 Lyon (FR); RABOUIN, Guillaume, 38300 Ruy (FR)
(74) Representative: Germain Maureau

(57) **Abstract**

A door brake (10) including: a braking arm (20) extending longitudinally between a first end (22) and a second end (24) along an axis (A-A), the braking arm including one or more engagement surface (36a, 36b), the braking arm being configured to be translated axially between at least a first position and a second position, and the engagement surface being configured to receive an engagement force exerted on the engagement surface when the braking arm is translated from the first position toward the second position; and one or more braking element (40a, 40b) configured to engage the engagement surface of the braking arm to exert the engagement force on the engagement surface.

## Description

### TECHNICAL FIELD

The disclosure relates generally to vehicles. In particular aspects, the disclosure relates to a door brake configured for use on a vehicle.

The disclosure may relate to heavy-duty vehicles, such as trucks, buses, and/or construction equipment, among other vehicle types. Although the disclosure may be described with respect to a particular vehicle, the disclosure is not restricted to any particular vehicle.

### BACKGROUND

A door of a vehicle is typically affixed to the vehicle by a hinge assembly, which allows the door to be transitioned between a closed position and an open position. The hinge assembly between the door and the vehicle allows the door to be moved and/or extended to a normal limit when transitioning the door toward and/or to the open position.

Movement and/or overextension of the door beyond the normal limit applies excess stress on one or more of the hinge assembly, the door, and the vehicle, which may cause damage to and, thus, failure of, one or more of the hinge assembly, the door, and the vehicle. It is contemplated that the door may be moved and/or overextended beyond the normal limit due to an external force, such as a high wind, acting on the door. Additionally or alternatively, for a vehicle including a passenger compartment configured to tilt forward to provide access to an engine bay of the vehicle, such as a tractor unit of a semi-trailer truck, the door may be moved and/or overextended beyond the normal limit due to an external force, such as a gravity, acting on the door when the passenger compartment is tilted.

The door of the vehicle may include a door check (may also be referred to as a "door stopper" and/or a "door arrester") configured to provide a connection between the door of the vehicle and a door frame of the vehicle and to restrict movement and/or extension of the door.

However, currently available door checks are typically only configured to restrict movement of the door during a normal opening action of the door, each time the normal opening action of the door is performed, regardless of whether the door is being moved and/or overextended beyond the normal limit. Additionally or alternatively, currently available door checks are typically only configured to restrict movement of the door at predetermined positions and/or abruptly, without gradually applying a braking force, during performance of the normal opening action of the door, regardless of whether the door is being moved and/or overextended beyond the normal limit. Such configurations result in premature deterioration of the door check.

Additionally or alternatively, currently available door checks typically include complex configurations, such as one or more electrical component. Such a configuration results in an increased cost of manufacture and implementation.

It is desirable to provide a door brake configured for use on a vehicle that is configured to regulate and/or reduce a speed of a door of a vehicle when the door is in risk of and/or is being moved and/or overextended beyond a normal limit.

### SUMMARY

According to aspects of the disclosure, a door brake configured for use on a vehicle is provided. The door brake includes a braking arm extending longitudinally between a first end and a second end along an axis. The braking arm includes one or more engagement surface. The braking arm is configured to be translated axially between at least a first position and a second position. The engagement surface is configured to receive an engagement force exerted on the engagement surface when the braking arm is translated from the first position toward the second position. The door brake includes one or more braking element configured to engage the engagement surface of the braking arm to exert the engagement force on the engagement surface.

According to aspects of the disclosure, the braking arm may include a width and the braking arm may be configured to increase the width between the first end and the second end of the braking arm.

According to aspects of the disclosure, the engagement surface of the braking arm may be included at an angle relative to the axis.

According to aspects of the disclosure, the angle of the engagement surface of the braking arm may be included within a range between 1° and 30°.

According to aspects of the disclosure, the engagement surface of the braking arm includes one or more of a plurality of projections and a plurality of depressions.

According to aspects of the disclosure, the braking arm may include a stop member oriented at or adjacent to the first end of the braking arm configured to prevent translation of the braking arm.

According to aspects of the disclosure, the braking arm may include a fastening member oriented at or adjacent to the second end of the braking arm configured to secure the braking arm to at least a portion of a vehicle.

According to aspects of the disclosure, the braking element may include a braking pad configured to engage the engagement surface of the braking arm.

According to aspects of the disclosure, the braking element may include a bias member configured to bias the braking pad of the braking element toward the engagement surface of the braking arm.

According to aspects of the disclosure, the door brake may include a support element configured to receive the braking arm, wherein the braking arm may be configured to be translated between the first position and the second position relative to the support element.

According to aspects of the disclosure, the support element may be configured to mount the braking element.

According to aspects of the disclosure, the braking arm may include at least a first engagement surface and a second engagement surface.

According to aspects of the disclosure, the first engagement surface of the braking arm may be oriented substantially opposite the second engagement surface of the braking arm about the axis.

According to aspects of the disclosure, the door brake may include a first braking element and a second braking element, wherein the first braking element may be configured to engage the first engagement surface of the braking arm and the second braking element may be configured to engage the second engagement surface of the braking arm.

According to aspects of the disclosure, a vehicle is provided. The vehicle includes a door and the door brake according to any aspect of the disclosure presented herein.

According to aspects of the disclosure, a method of regulating a speed of a door of a vehicle is provided. The method includes providing the door brake according to any aspect of the disclosure presented herein and opening the door of the vehicle.

In the manner described and according to aspects illustrated herein, the door brake, the vehicle, and the method are configured to regulate and/or reduce a speed of a door of a vehicle when the door is in risk of and/or is being moved and/or overextended beyond a normal limit.

The disclosed aspects, examples (including any preferred examples), and/or accompanying claims may be suitably combined with each other as would be apparent to a person having ordinary skill in the art. Additional features and advantages are disclosed in the following description, claims, and drawings, and in part will be readily apparent therefrom to persons skilled in the art and/or recognized by practicing the disclosure as described herein.

### BRIEF DESCRIPTION OF THE DRAWINGS

Aspects of the disclosure will be described with reference to the drawings, where like numerals reflect like elements:
**FIG. 1** shows a side perspective view of a vehicle according to aspects of the disclosure;
**FIG. 2** shows a partial exploded side view of the door of the vehicle of **FIG. 1** according to aspects of the disclosure;
**FIG. 3A** shows a side perspective view of a door brake configured for use on the vehicle of **FIG. 1** according to aspects of the disclosure;
**FIG. 3B** shows an enlarged side perspective view of the door brake of **FIG. 3A** according to aspects of the disclosure;
**FIG. 3C** shows an enlarged side perspective view of the door brake of **FIG. 3A** according to aspects of the disclosure;
**FIG. 3D** shows an enlarged side perspective view of the door brake of **FIG. 3A** according to aspects of the disclosure;
**FIG. 4** shows a partial side perspective view of the door brake configured for use on the vehicle of **FIG. 3A** according to aspects of the disclosure;
**FIG. 5** show a partial top view of the door brake of **FIG. 3A** according to aspects of the disclosure;
**FIG. 6A** shows a top view of the door brake of **FIG. 3A****,** depicting a braking arm of the door brake in a first position according to aspects of the disclosure; and
**FIG. 6B** shows a top view of the door brake of **FIG. 3A****,** depicting the braking arm of the door brake in a second position according to aspects of the disclosure.

### DETAILED DESCRIPTION

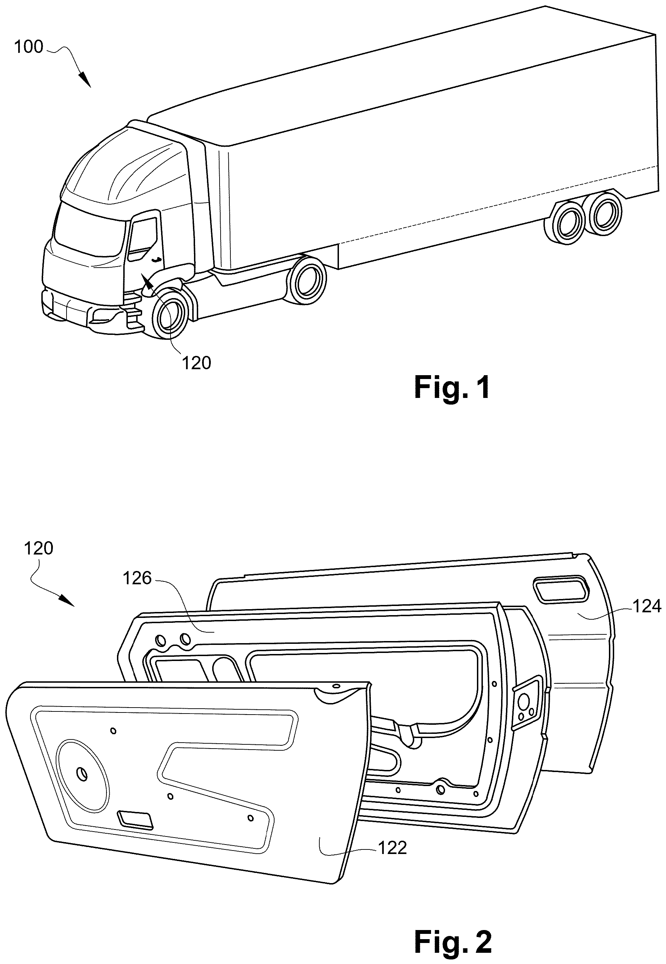

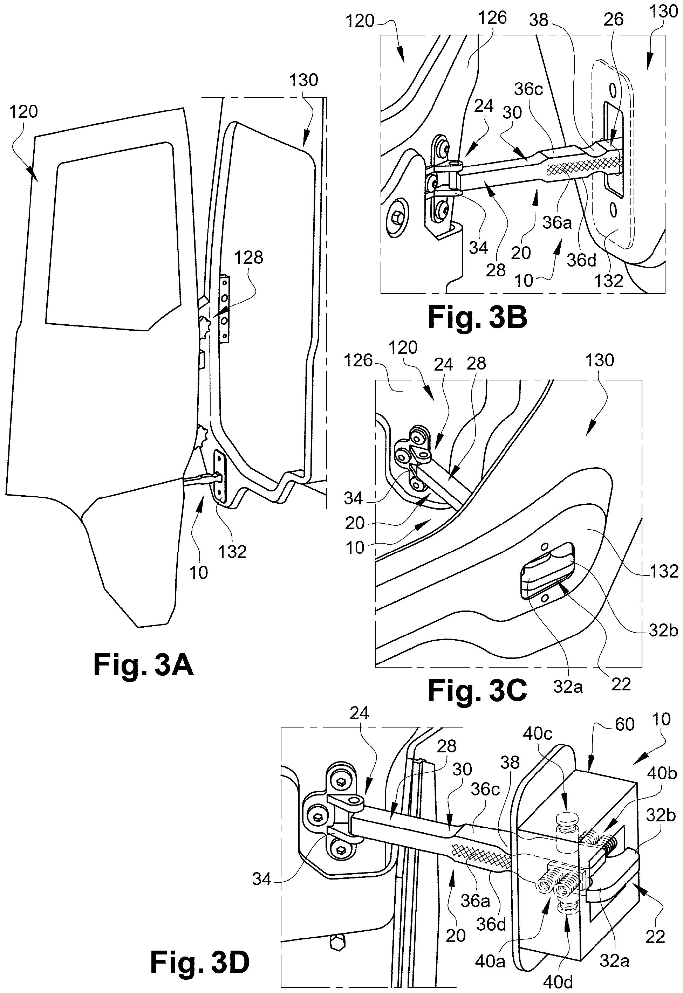

**FIGS. 1-6B** show a door brake 10 configured for use on a vehicle 100. Referring to **FIG. 1****,** it is contemplated that the vehicle 100 may be a heavy-duty vehicle, such as a truck, bus, and/or construction equipment. However, it should be understood that the door brake 10 may be configured for use on other types of vehicles. Additionally or alternatively, it is contemplated that the door brake 10 may be considered to be and/or referred to as being included by the vehicle 100. Referring to **FIGS. 3A-3D****,** at least a portion of the door brake 10 may be configured to be received by and/or affixed to at least a portion of the vehicle 100. In particular, at least a portion of the door brake 10 may be configured to be received by and/or affixed to at least a portion of a door frame 130 of the vehicle 100. The door frame 130 may be configured to cooperate with and/or to receive a door 120 of the vehicle 100. Additionally or alternatively, at least a portion of the door brake 10 may be configured to be received by and/or affixed to an anchoring part 132 of the door frame 130 configured to support the door brake 10. However, the door brake 10 will be described herein as being independent of the vehicle 100, unless description of the door brake 10 being included by the vehicle 100 is otherwise necessary.

As shown in **FIGS. 1-3D****,** the vehicle 100 to which the door brake 10 may be configured for use on includes a door 120. In examples, the door brake 10 may be configured for use on the door 120. Additionally or alternatively, it is contemplated that the door brake 10 may be considered to be and/or referred to as being included by the door 120. However, the door brake 10 will be described herein as being independent of the door 120, unless description of the door brake 10 being included by the door 120 is otherwise necessary. In examples, the door 120 may be configured to be included on a side of the vehicle 100. Additionally or alternatively, the door 120 may be configured to be included on a rear of the vehicle 100. It is contemplated that the terms "front," "rear," "side," "top," and "bottom" as used herein may be understood relative to each other and/or to a direction of movement of the vehicle 100, such that the term "front" corresponds to a forward movement of the vehicle 100, the term "rear" corresponds to a backward movement of the vehicle 100, the term "side" corresponds to a sideward movement of the vehicle 100, the term "top" corresponds to an upward movement of the vehicle 100, and the term "bottom" corresponds to a downward movement of the vehicle 100.

As shown by **FIGS. 1-3D****,** at least a portion of the door 120 may be configured to receive and/or be coupled with at least a portion of the door brake 10 (i.e. a second end 24 and/or a fastening member 34 of the door brake 10). Referring to **FIG. 2****,** the door 120 may include at least an interior panel 122, an exterior panel 124, and a space (not shown) defined between the interior panel 122 and the exterior panel 124. It is contemplated that the term "interior" may relate to and/or be considered to be a passenger compartment (not shown) of the vehicle 100 and that the term "exterior" may relate to as and/or be considered to be an environment surrounding the vehicle 100.

In examples, the door 120 may include a component panel 126 arranged between the interior panel 122 and the exterior panel 124. The component panel 126 may be configured to support one or more component provided on the door 120. In examples, at least a portion of the component panel 126 may be configured to receive and/or be coupled with at least a portion of the door brake 10. Alternatively, it is contemplated that one or more of the interior panel 122 and the exterior panel 124 may be configured to function as, considered to be, and/or referred to as the component panel 126. However, the door 120 will be described herein as including the component panel 126, unless reference to one or more of the interior panel 122 and the outer panel 124 being configured to function as, considered to be, and/or referred to as the component panel 126 is otherwise necessary.

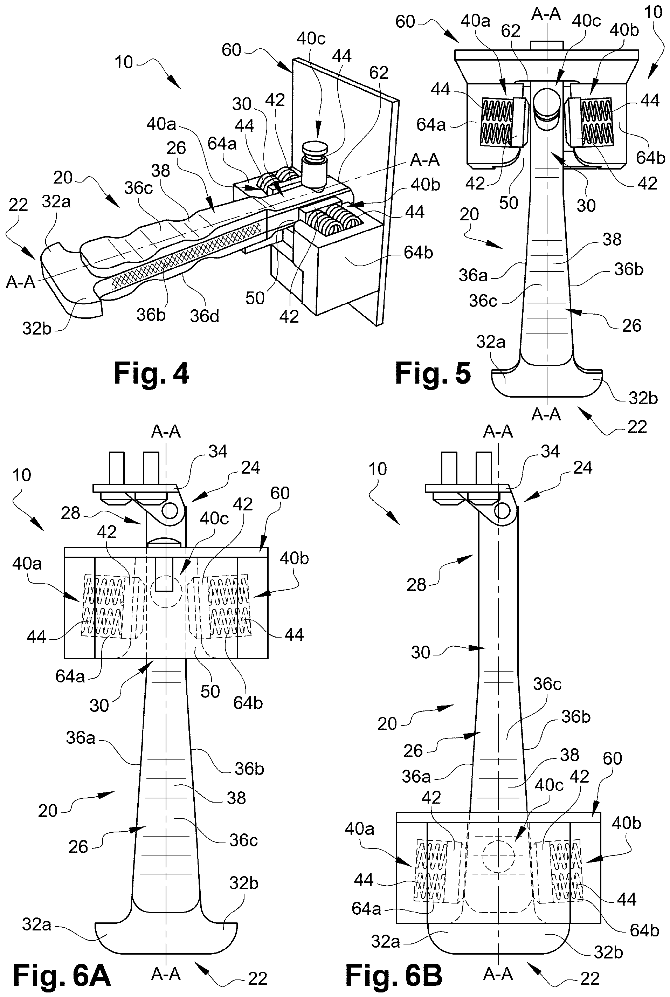

In examples, the door 120 of the vehicle 100 is configured to be transitioned between a closed position (see **FIGS. 4-6A**) and an open position (see **FIGS. 3A-3D** **and** **6B**). Accordingly, referring to **FIGS. 3A****,** the door 120 may include a door operation unit 128 including one or more of a latch assembly, a hinge assembly, a gear assembly, an electrical assembly, a hydraulic assembly, and/or the like configured for operation of the door 120. The door 120 is configured to allow a user to access an interior of the vehicle 100 when the user is at an exterior of the vehicle 100 and to allow the user to access the exterior of the vehicle 100 when the user is at the interior of the vehicle 100. In the closed position of the door 120, the user is not capable of accessing the interior of the vehicle 100 when the user is at the exterior of the vehicle 100 and not capable of accessing the exterior of the vehicle 100 when the user is at the interior of the vehicle 100. In the open position of the door 120, the user is capable of accessing the interior of the vehicle 100 when the user is at the exterior of the vehicle 100 and capable of accessing the exterior of the vehicle 100 when the user is at the interior of the vehicle 100.

In examples, the open position of the door 120 of the vehicle 100 may include movement and/or extension of the door 120 beyond a normal limit of extension of the door 120. It is contemplated that the term "normal limit" may be understood as any extension of the door 120 toward and/or to the open position of the door 120 during normal use of the door 120. Additionally or alternatively, the term "normal limit" may be understood as a threshold of extension of the door 120, which, if exceeded, results in overextension of the door 120 and a risk of application of excess stress on one or more of the door operation unit 128, the door 120, and the vehicle 100, which may cause damage to and, thus, failure of, one or more of the door operation unit 128, the door 120, and the vehicle 100.

As shown in **FIGS. 3A-6B****,** the door brake 10 includes a braking arm 20 extending substantially longitudinally between a first end 22 and a second end 24 along an axis A-A. It is contemplated that the braking arm 20 may be configured to be, considered to be, and/or referred to as a shaft, a rod, and/or a belt. In examples, the braking arm 20 may be formed from a substantially rigid material, such as a metal, a plastic, a rubber, and/or the like. The braking arm 20 is configured to be translated axially between at least a first position (see **FIGS. 4-6A**) and a second position (see **FIGS. 3A-3D** **and** **6B**). Additionally or alternatively, the braking arm 20 is configured to be translated between the first position and the second position relative to a braking element 40a, 40b (discussed in further detail below) and/or a support element 60 (discussed in further detail below) of the door brake 10.

In examples, the first position of the braking arm 20 may correspond to the closed position of the door 120 of the vehicle 100 and/or a normal extension of the door 120 and the second position of the braking arm 20 may correspond to the open position of the door 120 and/or an overextension of the door 120. Additionally or alternatively, the first position of the braking arm 20 may correspond to the normal limit of extension of the door 120 and the second position of the braking arm 20 may correspond to movement and/or overextension of the door 120 beyond the normal limit of extension of the door 120. In the first position of the braking arm 20, the first end 22 of the braking arm 20 is oriented farther from the braking element 40a, 40b of the door brake 10 than an orientation of the first end 22 of the braking arm 20 in the second position of the braking arm 20. In the second position of the braking arm 20, the first end 22 of the braking arm 20 is oriented closer to the braking element 40a, 40b of the door brake 10 than an orientation of the first end 22 of the braking arm 20 in the first position of the braking arm 20.

The braking arm 20 may be configured to be translated between the first position and the second position of the braking arm 20 when the door 120 is transitioned between the closed position and the open position. Additionally or alternatively, the braking arm 20 may be configured to be translated between the first position and the second position when the door 120 is in risk of and/or is being moved and/or overextended beyond the normal limit. In examples, the braking arm 20 may be configured to be translated from the first position toward and/or to the second position when the door 120 is transitioned from the closed position toward and/or to the open position. Additionally or alternatively, the braking arm 20 may be configured to be translated from the first position toward and/or to the second position when the door 120 is in risk of and/or is being moved and/or overextended beyond the normal limit. In examples, the braking arm 20 may be configured to be translated from the second position toward and/or to the first position when the door 120 is transitioned from the open position toward and/or to the closed position. Additionally or alternatively, the braking arm 20 may be configured to be translated from the second position toward and/or to the first position when the door 120 toward and/or to the normal limit from being moved and/or overextended beyond the normal limit.

The door brake 10 is configured to regulate and/or reduce a speed of translation of the braking arm 20 from the first position of the braking arm 20 toward and/or to the second position of the braking arm 20. Accordingly, as the braking arm 20 is configured to be connected to the door 120 of the vehicle 100, the door brake 10 is configured to regulate and/or reduce a speed of the door 120 when the braking arm 20 is translated from the first position toward and/or to the second position. In this manner, the door brake 10 is configured to regulate and/or reduce a speed of the door 120 when the door 120 is transitioned from the closed position toward and/or to the open position. Additionally or alternatively, in this manner, the door brake 10 is configured to regulate and/or reduce a speed of the door 120 when the door 120 is in risk of and/or is moved and/or overextended beyond the normal limit.

Referring to **FIGS. 3D-6B****,** in examples, the braking arm 20 may include at least a first segment 26 and a second segment 28 extending between the first end 22 and the second end 24 of the braking arm 20. The first segment 26 of the braking arm 20 may extend between the first end 22 of the braking arm 20 and a central portion 30 of the braking arm 20. In examples, the central portion 30 of the braking arm 20 is oriented between the first end 22 and the second end 24 of the braking arm 20. The second segment 28 of the braking arm 20 may extend between the second end 24 of the braking arm 20 and the central portion 30 of the braking arm 20.

The first segment 26 may be configured to regulate and/or reduce a speed of translation of the braking arm 20 and, thus, a speed of transition of the door 120 of the vehicle 100 during transition of the door 120 from the closed position of the door 120 toward and/or to the open position of the door 120. Additionally or alternatively, the first segment 26 may be configured to regulate and/or reduce a speed of translation of the braking arm 20 and, thus, a speed of transition of the door 120 when the door 120 is in risk of and/or is being moved and/or overextended beyond the normal limit of extension of the door 120. The second segment 28 of the door 120 may be configured for providing a connection between the braking arm 20 and/or the door brake 10 and the component panel 126 of the door 120.

In examples, the first segment 26 of the braking arm 20 may be configured for a secondary extension (may also be referred to herein as a "supplementary extension") of the door 120 beyond the normal limit. Accordingly, the first segment 26 may include a first length corresponding to extension of the door 120 beyond the normal limit. In examples, the first length of the first segment 26 may be included within a range of 30 mm and 200 mm. It is contemplated that the first length of the first segment 26 may be determined depending on an opening angle of the door 120 and/or a desired speed reduction of the door 120.

In examples, the second segment 28 may be configured for a primary extension (may also be referred to herein as a "normal extension") of the door 120 to the normal limit. Accordingly, the second segment 28 may include a second length corresponding to extension of the door 120 to the normal limit. In examples, the second length of the second segment 28 may be included within a range of 30 mm and 200 mm. It is contemplated that the second length of the second segment 28 may be determined depending on an opening angle of the door 120 and/or a desired speed reduction of the door 120.

In examples, the secondary extension of the door 120 beyond the normal limit may occur after the primary extension of the door 120 to the normal limit. In this manner, by configuring the first segment 26 for the secondary extension of the door 120, which occurs after the primary extension of the door 120 and/or overextension of the door 120 beyond the normal limit, one or more component (e.g. the braking arm 20 and the braking element 40a, 40b) of the first segment 26 may only be engaged when the door 120 is in risk of or is undergoing movement and/or overextension beyond the normal limit, thereby preventing premature deterioration of the one or more component of the first segment 26 and, thus, premature deterioration of the door brake 10. Additionally, in this manner, premature deterioration of one or more of the door 120, the door operation unit 128, and the component panel 126 is prevented.

Referring to **FIGS. 3C-5****,** the first end 22 of the braking arm 20 may be configured to prevent movement of the door 120 of the vehicle 100 when the door 120 is transitioned from the closed position of the door 120 toward and/or to the open position of the door 120. Additionally or alternatively, the first end 22 of the braking arm 20 may be configured to prevent movement of the door 120 of the vehicle 100 when the door 120 is in risk of and/or is being moved and/or overextended beyond the normal limit. Accordingly, the braking arm 20 may include one or more stop member 32a, 32b oriented at or adjacent to the first end 22 of the braking arm 20 configured to prevent movement of the door 120. It is contemplated that the stop member 32a, 32b may be configured to be, considered to be, and/or referred to as a "shoulder" or a "hook." In examples, the braking arm 20 may include a first stop member 32a and a second stop member 32b extending substantially radially from the braking arm 20. The first stop member 32a may be oriented substantially opposite the second stop member 32b about the axis A-A. In this manner, referring to **FIGS. 3C-3D****,** one or more of the first stop member 32a and the second stop member 32b are configured to abut at least a portion of the support element 60 (i.e. a slot 64a, 64b of the support element 60, discussed in further detail below) of the door brake 10 surrounding a passage 50 defined by the support element 60 (discussed in further detail below) when the braking arm 20 is translated from the first position of the braking arm 20 toward and/or to the second position of the braking arm 20, thereby preventing movement of the door 120.

Referring to **FIGS. 3B-3D****,** the second end 24 of the braking arm 20 may be configured to secure the braking arm 20 to component panel 126 of the door 120 of the vehicle 100. Accordingly, the braking arm 20 may include a fastening member 34 at or adjacent to the second end 24 of the braking arm 20 configured to secure the braking arm 20 to the component panel 126. The fastening member 34 and the component panel 126 may be configured to receive one or more fastener, such as a threaded fastener (e.g. a bolt), configured to secure the fastening member 34 and, thus, the braking arm 20, to the component panel 126.

As illustrated by **FIGS. 3D-6B****,** the braking arm 20 includes one or more engagement surface 36a, 36b extending between the first end 22 and the second end 24 of the braking arm 20. In particular, the engagement surface 36a, 36b may be included between the first end 22 and the central portion 30 of the braking arm 20. Accordingly, the engagement surface 36a, 36b may be included within the first segment 26 of the braking arm 20. In examples, the braking arm 20 may include a plurality of the engagement surface 36a, 36b. In particular, the braking arm 20 may include at least a first engagement surface 36a and a second engagement surface 36b. The first engagement surface 36a may be oriented substantially opposite the second engagement surface 36b about the axis A-A. In examples, the first engagement surface 36a may extend at a first lateral face of the braking arm 20 and the second engagement surface 36b may extend at a second lateral face of the braking arm 20. Alternatively, the first engagement surface 36a may extend at a top face of the braking arm 20 and the second engagement surface 36b may extend at a bottom face of the braking arm 20. It is contemplated that the first engagement surface 36a and the second engagement surface 36b may be referred to herein collectively as "the engagement surface 36a, 36b," unless reference to each of the first engagement surface 36a and the second engagement surface 36b is otherwise necessary.

The engagement surface 36a, 36b of the braking arm 20 is configured to be engaged by the braking element 40a, 40b of the door brake 10. In examples, engagement of the engagement surface 36a, 36b by the braking element 40a, 40b regulates and/or reduces a speed of translation of the braking arm 20 from the first position of the braking arm 20 toward and/or to the second position of the braking arm 20. Accordingly, engagement of the engagement surface 36a, 36b by the braking element 40a, 40b regulates and/or reduces a speed of the door 120 of the vehicle 100 when the braking arm 20 is translated from the first position toward and/or to the second position. In this manner, engagement of the engagement surface 36a, 36b by the braking element 40a, 40b may regulate and/or reduce a speed of the door 120 from the closed position toward and/or to the open position. Additionally or alternatively, in this manner, engagement of the engagement surface 36a, 36b by the braking element 40a, 40b may regulate and/or reduce a speed of the door 120 when the door 120 is in risk of and/or is moved and/or overextended beyond the normal limit.

Referring to **FIGS. 3D-6B****,** the braking arm 20 includes a width and the braking arm 20 is configured to increase the width between the first end 22 of the braking arm 20 and the second end 24 of the braking arm 20 (i.e. along a length of the braking arm 20). The braking arm 20 may be configured to increase the width between the first end 22 of the braking arm 20 and the second end 24 of the braking arm 20 gradually. In particular, the braking arm 20 may be configured to increase the width of the braking arm 20 from the second end 24 of the braking arm 20 toward and/or to the first end 22 of the braking arm 20. Additionally or alternatively, the braking arm 20 may be configured to increase the width of the braking arm 20 from the central portion 30 of the braking arm 20 toward and/or to the first end 22 of the braking arm 20. Accordingly, the braking arm 20 may be configured to increase the width of the braking arm 20 within the first segment 26 of the braking arm 20. The braking arm 20 includes a first width at the first end 22 of the braking arm 20 and a second width at the second end 24 of the braking arm 20 and/or the central portion 30 of the braking arm 20. The first width at the first end 22 of the braking arm 20 is greater than the second width at the second end 24 of the braking arm 20 and/or the central portion 30 of the braking arm 20. The first width of the braking arm 20 may be included within a range of 1 mm and 15 mm. The second width of the braking arm 20 may be included within a range of 5 mm and 30 mm. It is contemplated that the first width of the braking arm 20 and the second width of the braking arm 20 may be determined depending on a weight of the door 120 and/or a desired speed reduction of the door 120.

Additionally or alternatively, the engagement surface 36a, 36b of the braking arm 20 may be included at an angle with respect to the axis A-A. The angle of the engagement surface 36a, 36b may be included within a range of 1° and 30°. In examples, the angle of the engagement surface 36a, 36b may correspond to the increase of the width of the braking arm 20 between the first end 22 of the braking arm 20 and the second end 24 of the braking arm 20 and/or between the first end 22 of the braking arm 20 and the central portion 30 of the braking arm 20.

In this manner, by increasing the width of the braking arm 20 between the first end 22 and the second end 24 of the braking arm 20 and/or including the engagement surface 36a, 36b at the angle, the braking arm 20 is configured to increase an engagement force exerted on the engagement surface 36a, 36b by the braking element 40a, 40b when the braking arm 20 is translated from the first position of the braking arm 20 toward and/or to the second position of the braking arm 20, thereby regulating and/or reducing a speed of translation of the braking arm 20 when the braking arm 20 is translated from the first position toward and/or to the second position.

Additionally or alternatively, the braking arm 20 includes a depth and the braking arm 20 is configured to increase the depth between the first end 22 of the braking arm 20 and the second end 24 of the braking arm 20 (i.e. along the length of the braking arm 20). The braking arm 20 may be configured to increase the depth between the first end 22 of the braking arm 20 and the second end 24 of the braking arm 20 gradually. In particular, the braking arm 20 may be configured to increase the depth of the braking arm 20 from the second end 24 of the braking arm 20 toward and/or to the first end 22 of the braking arm 20. Additionally or alternatively, the braking arm 20 may be configured to increase the depth of the braking arm 20 from the central portion 30 of the braking arm 20 toward and/or to the first end 22 of the braking arm 20. Accordingly, the braking arm 20 may be configured to increase the depth of the braking arm 20 within the first segment 26 of the braking arm 20. The braking arm 20 includes a first depth at the first end 22 of the braking arm 20 and a second depth at the second end 24 of the braking arm 20 and/or the central portion 30 of the braking arm 20. The first depth at the first end 22 of the braking arm 20 is greater than the second depth at the second end 24 of the braking arm 20 and/or the central portion 30 of the braking arm 20. The first depth of the braking arm 20 may be included within a range of 1 mm and 15 mm. The second depth of the braking arm 20 may be included within a range of 5 mm and 30 mm. It is contemplated that the first depth of the braking arm 20 and the second depth of the braking arm 20 may be determined depending on a weight of the door 120 and/or a desired speed reduction of the door 120.

In this manner, by increasing the depth of the braking arm 20 between the first end 22 and the second end 24 of the braking arm 20, the braking arm 20 is configured to increase a contact surface and/or contact between the engagement surface 36a, 36b and the braking element 40a, 40b when the braking arm 20 is translated from the first position of the braking arm 20 toward and/or to the second position of the braking arm 20, thereby improving regulation and/or reduction of a speed of translation of the braking arm 20 when the braking arm 20 is translated from the first position toward and/or to the second position.

Referring to **FIG. 3D-4****,** the engagement surface 36a, 36b of the braking arm 20 may be configured to increase friction and/or traction between the engagement surface 36a, 36b and the braking element 40a, 40b when the engagement surface 36a, 36b is engaged by the braking element 40a, 40b. In examples, the engagement surface 36a, 36b may include one or more of a plurality of projections and a plurality of depressions configured to increase friction and/or traction between the engagement surface 36a, 36b and the braking element 40a, 40b when the engagement surface 36a, 36b is engaged by the braking element 40a, 40b.

As shown in **FIGS. 3D-6B****,** the door brake 10 includes the braking element 40a, 40b. The braking element 40a, 40b is configured to engage the engagement surface 36a, 36b of the braking arm 20 when the braking arm 20 is translated between the first position of the braking arm 20 and the second position of the braking arm 20. In particular, the braking element 40a, 40b is configured to engage the engagement surface 36a, 36b when the braking arm 20 is translated from the first position toward and/or to the second position. The braking element 40a, 40b is oriented radially outwardly relative to the engagement surface 36a, 36b. It is contemplated that the terms "inner," "inward," "outer," and "outward" may be understood in relation to the axis A-A, such that the terms "inner" and "inward" may be understood as a position and/or direction closer to and/or toward the axis A-A and the terms "outer" and "outward" may be understood as a position and/or direction farther from and/or away from the axis A-A.

In examples, the braking element 40a, 40b may be oriented at or adj acent to the central portion 30 of the braking arm 20 when the braking arm 20 is in the first position of the braking arm 20 and the braking element 40a, 40b may be oriented at or adjacent to the first end 22 of the braking arm 20 when the braking arm 20 is in the second position of the braking arm 20. In this manner, the engagement force exerted on the engagement surface 36a, 36b by the braking element 40a, 40b is increased when the braking arm 20 is translated from the first position toward and/or to the second position, thereby regulating and/or reducing a speed of translation of the braking arm 20 when the braking arm 20 is translated from the first position toward and/or to the second position.

The braking element 40a, 40b may include a braking pad 42 configured to engage the engagement surface 36a, 36b of the braking arm 20 when the braking arm 20 is translated between the first position of the braking arm 20 and the second position of the braking arm 20. The braking pad 42 may be formed from a polymeric material, such as rubber, plastic, and/or the like. The braking element 40a, 40b may include one or more bias member 44 configured to bias the braking pad 42 and/or the braking element 40a, 40b toward and/or to the braking arm 20. In examples, the door brake 10 may include a plurality of the braking element 40a, 40b. In particular, the door brake 10 may include at least a first braking element 40a and a second braking element 40b. The first braking element 40a may be configured to engage the first engagement surface 36a and the second braking element 40b may be configured to engage the second engagement surface 36b. Accordingly, the first braking element 40a may be oriented substantially opposite the second braking element 40b about the axis A-A.

Additionally or alternatively, the first braking element 40a and the second braking element 40b may be oriented to define a passage 50 between the first braking element 40a and the second braking element 40b. The passage 50 may extend substantially axially between the first braking element 40a and the second braking element 40b. The passage 50 may be configured to allow for translation of the braking arm 20 between the first position of the braking arm 20 and the second position of the braking arm 20 between the first braking element 40a and the second braking element 40b. In this manner, the first braking element 40a and the second braking element 40b may be configured to exert the engagement force on the first engagement surface 36a and the second engagement surface 36b, respectively, when the braking arm 20 is translated between the first position and the second position. It is contemplated that the first braking element 40a and the second braking element 40b may be referred to herein collectively as "the braking element 40a, 40b," unless reference to each of the first braking element 40a and the second braking element 40b is otherwise necessary.

As shown by **FIGS. 3D-6B****,** the door brake 10 includes a support element 60 configured to receive the braking arm 20. It is contemplated that the support element 60 may be configured to be, considered to be, and/or referred to as a "housing." The support element 60 may be configured to be received by and/or affixed to the anchoring part 132 of the door frame 130 of the vehicle 100. Accordingly, the support element 60 may include a bracket and/or the like (not shown) configured to be affixed to the anchoring part 132. Referring to **FIGS. 4-****5,** the support element 60 may define an opening 62 configured for extension of the braking arm 20 through the support element 60, such that the braking arm 20 is configured to be transitioned between the first position of the braking arm 20 and the second position of the braking arm 20, through and/or relative to the support element 60.

As shown by **FIGS. 3D-6B****,** the support element 60 is configured to receive the braking element 40a, 40b. Additionally or alternatively, the support element 60 may be configured to mount the braking element 40a, 40b. Referring to **FIGS. 4-5****,** the support element 60 may include one or more slot 64a, 64b configured to receive and/or mount the braking element 40a, 40b to the support element 60. The slot 64a, 64b may be configured to allow for radial movement of the braking pad 42 of the braking element 40a, 40b and for compression (see **FIG. 6B**) of the bias member 44 of the braking element 40a, 40b when the braking arm 20 is translated from the first position of the braking arm 20 toward the second position of the braking arm 20. The slot 64a, 64b may be configured to allow for radial movement of the braking pad 42 and for expansion (see **FIG. 6A**) of the bias member 44 when the braking arm 20 is translated from the second position toward the first position. In examples, the support element 60 may include at least a first slot 64a configured to receive and/or mount the first braking element 40a and a second slot 64b configured to receive and/or mount the second braking element 40b. The opening 62 defined by the support element 60 may be oriented between the first slot 64a and the second slot 64b. The passage 50 defined between the first braking element 40a and the second braking element 40b may be defined between the first slot 64a and the second slot 64b. Accordingly, the passage 50 may be in communication with and/or substantially aligned with the opening 60, thereby allowing for translation of the braking arm 20 between the first position and the second position and for the engagement force to be exerted on the first engagement surface 36a and the second engagement surface 36b of the braking arm 20 between the first position and the second position.

Referring to **FIG. 3B-4****,** in examples, the braking arm 20 may include one or more of a third engagement surface 36c and a fourth engagement surface 36d. The third engagement surface 36c and the fourth engagement surface 36d may extend substantially axially between the first engagement surface 36a and the second engagement surface 36b. The third engagement surface 36c may be oriented substantially opposite the fourth engagement surface 36d about the axis A-A. The third engagement surface 36c and the fourth engagement surface 36d may include one or more notch 38 configured to be engaged. In examples, each of the third engagement surface 36c and the fourth engagement surface 36d may include a plurality of notches 38. In examples in which the braking arm 20 includes one or more of the third engagement surface 36c and the fourth engagement surface 36d, the door brake 10 may include one or more of a third braking element 40c configured to engage the third engagement surface 36c and a fourth braking element 40d configured to engage the fourth engagement surface 36d when the braking arm 20 is translated between the first position of the braking arm 20 and the second position of the braking arm 20. In particular, the third braking element 40c and the fourth braking element 40d may be configured to engage the notches 38 of the third engagement surface 36c and the fourth engagement surface 36d, respectively. In this manner, the door brake 10 may be configured to additionally regulate and/or reduce a speed of translation of the braking arm 20 and, thus, a speed of transition of the door 120 of the vehicle 100 at one or more predetermined position corresponding to the notches 38 of the third engagement surface 36c and the fourth engagement surface 36d.

As illustrated by **FIGS. 3A-6B****,** during operation, the user of the vehicle 100 may transition the door 120 of the vehicle 100 from the closed position toward the open position. When the door 120 is in risk of and/or is being moved and/or overextended beyond the normal limit, the braking arm 20 is translated from the first position of the braking arm 20 (see **FIGS. 4-6A**) toward and/or to the second position of the braking arm 20 (see **FIG. 3A-3D** **and** **6B**). The braking element 40a, 40b engages the engagement surface 36a, 36b of the braking arm 20 when the braking arm 20 is translated from the first position toward and/or to the second position. The braking element 40a, 40b gradually increases the engagement force exerted on the engagement surface 36a, 36b as the braking arm 20 is translated further toward and/or to the second position, thereby regulating and/or reducing a speed of translation of the braking arm 20 toward and/or to the second position and, thus, regulating and/or reducing a speed of transition of the door 120 when the door 120 is moved and/or overextended beyond the normal limit. The stopper element 32a, 32b of the braking arm 20 abuts the support element 60 when the braking arm 20 is in the second position, thereby preventing movement of the door 120 after regulating and/or reducing a speed of the door 120.

In this manner, the door brake 10 is configured regulate and/or reduce a speed of the door 120 of the vehicle 100 when the door 120 is in risk of and/or is being moved and/or overextended beyond the normal limit. Accordingly, damage to one or more of the door operation unit 128, the door 120, and the vehicle 100 is prevented without prematurely deteriorating the door brake 10.

According to examples of the door brake 10, the door brake 10 may be provided as follows:
Example 1: A door brake 10 configured for use on a vehicle 100, the door brake 10 including: a braking arm 20 extending longitudinally between a first end 22 and a second end 24 along an axis (A-A), the braking arm 20 including one or more engagement surface 36a, 36b, the braking arm 20 being configured to be translated axially between at least a first position and a second position, and the engagement surface 36a, 36b being configured to receive an engagement force exerted on the engagement surface 36a, 36b when the braking arm 20 is translated from the first position toward the second position; and one or more braking element 40a, 40b configured to engage the engagement surface 36a, 36b of the braking arm 20 to exert the engagement force on the engagement surface 36a, 36b.
Example 2: The door brake 10 according to Example 1, wherein the braking arm 20 includes a width and the braking arm 20 is configured to increase the width between the first end 22 and the second end 24 of the braking arm 20.
Example 3: The door brake 10 according to any of Examples 1-2, wherein the engagement surface 36a, 36b of the braking arm 20 is included at an angle relative to the axis A-A.
Example 4: The door brake 10 according to Example 3, wherein the angle of the engagement surface 36a, 36b of the braking arm 20 is included within a range between 1° and 30°.
Example 5: The door brake 10 according to any of Examples 1-4, wherein the engagement surface 36a, 36b of the braking arm 20 includes one or more of a plurality of projections and a plurality of depressions.
Example 6: The door brake 10 according to any of Examples 1-5, wherein the braking arm 20 includes a stop member 32a, 32b oriented at or adj acent to the first end 22 of the braking arm 20 configured to prevent translation of the braking arm 20.
Example 7: The door brake 10 according to any of Examples 1-6, wherein the braking arm 20 includes a fastening member 34 oriented at or adjacent to the second end 24 of the braking arm 20 configured to secure the braking arm 20 to at least a portion of a vehicle 100.
Example 8: The door brake 10 according to any of Examples 1-7, wherein the braking element 40a, 40b includes a braking pad 42 configured to engage the engagement surface 36a, 36b of the braking arm 20.
Example 9: The door brake 10 according to Example 8, wherein the braking element 40a, 40b includes a bias member 44 configured to bias the braking pad 42 of the braking element 40a, 40b toward the engagement surface 36a, 36b of the braking arm 20.
Example 10: The door brake 10 according to any of Examples 1-9, including a support element 60 configured to receive the braking arm 20, wherein the braking arm 20 is configured to be translated between the first position and the second position relative to the support element 60.
Example 11: The door brake 10 according to Example 10, wherein the support element 60 is configured to mount the braking element 40a, 40b.
Example 12: The door brake 10 according to any of Examples 1-11, wherein the braking arm 20 includes at least a first engagement surface 36a and a second engagement surface 36b.
Example 13: The door brake 10 according to Example 12, wherein the first engagement surface 36a of the braking arm 20 is oriented substantially opposite the second engagement surface 36b of the braking arm 20 about the axis A-A.
Example 14: The door brake 10 according to any of Examples 12-13, including a first braking element 40a and a second braking element 40b, wherein the first braking element 40b is configured to engage the first engagement surface 36a of the braking arm 20 and the second braking element 40b is configured to engage the second engagement surface 36b of the braking arm 20.
Example 15: A vehicle 100 including a door 120 and the door brake 10 according to any of Examples 1-14.
Example 16: A method of regulating a speed of a door 120 of a vehicle 100, the method including providing the door brake 10 according to any of Examples 1-14 and opening the door 120 of the vehicle 100.

The detailed description set forth above provides information and examples with sufficient detail to enable those skilled in the art to practice the disclosure.

In the description, like numerals represent like parts. Although the technology disclosed herein is described with reference to specific examples, it should be understood that modifications and changes may be made to these examples without going beyond the general scope as defined by the claims. In particular, individual characteristics of the various examples shown and/or mentioned herein may be combined in additional examples. Consequently, the description and the drawings should be considered in a sense that is illustrative rather than restrictive. The Figures, which are not necessarily to scale, depict illustrative aspects and are not intended to limit the scope of the disclosure. The illustrative aspects depicted are intended only as exemplary.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to a particular example described. On the contrary, the intention of this disclosure is to cover all modifications, equivalents, and alternatives falling within the scope of the disclosure.

Various materials, methods of construction, methods of fastening, and the like may be described in the context of disclosed examples. Those skilled in the art will recognize known substitutes for the materials, construction methods, fastening methods, and the like, all of which are contemplated as compatible with the disclosed example and are intended to be encompassed by the appended claims.

As used in this disclosure and the appended claims, the singular forms "a," "an," and "the" include plural referents, unless the content clearly dictates otherwise. As used in this disclosure and the appended claims, the term "or" is generally employed in a sense including "and/or," unless the content clearly dictates otherwise.

Throughout the description, including the claims, the terms "comprising a," "including a," and "having a" should be understood as being synonymous with "comprising one or more," "including one or more," and "having one or more" unless otherwise stated. In addition, any range set forth in the description, including the claims, should be understood as including its end value(s), unless otherwise stated. Specific values for described elements should be understood to be within accepted manufacturing or industry tolerances known to one of skill in the art, and any use of the terms "substantially," "approximately," and "generally" should be understood to mean falling within such accepted tolerances.

When an element or feature is referred to herein as being "on," "engaged to," "connected to," or "coupled to" another element or feature, it may be directly on, engaged, connected, or coupled to the other element or feature, or intervening elements or features may be present. In contrast, when an element or feature is referred to herein as being "directly on," "directly engaged to," "directly connected to," or "directly coupled to" another element or feature, there may be no intervening elements or features present. Other words used to describe the relationship between elements or features should be interpreted in a like manner (e.g., "between" versus "directly between," "adjacent" versus "directly adjacent," etc.).

Spatially relative terms, such as "top," "bottom," "middle," "inner," "outer," "beneath," "below," "lower," "above," "upper," and the like may be used herein for ease of description to describe one element or relationship of a feature to another element(s) or feature(s) as illustrated in the drawings. Spatially relative terms may be intended to encompass different orientations of a device in use or operation in addition to the orientation depicted in the drawings. For example, if the device in the drawings is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Although the terms "first," "second," "third," etc. may be used herein to describe various elements, components, regions, layers, sections, and/or parameters, these elements, components, regions, layers, sections, and/or parameters should not be limited by these terms. These terms are only used to distinguish one element, component, region, layer, section, or parameter from another element, component, region, layer, section, or parameter. Thus, a first element, component, region, layer, section, or parameter discussed herein could be termed a second element, component, region, layer, section, or parameter without departing from the teachings of the present disclosure.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

Additionally, all of the disclosed features of an apparatus may be transposed, alone or in combination, to a method and vice versa.

## Claims

1. A door brake (10) configured for use on a vehicle (100), the door brake (10) comprising:
a braking arm (20) extending longitudinally between a first end (22) and a second end (24) along an axis (A-A), the braking arm (20) including one or more engagement surface (36a, 36b), the braking arm (20) being configured to be translated axially between at least a first position and a second position, and the engagement surface (36a, 36b) being configured to receive an engagement force exerted on the engagement surface (36a, 36b) when the braking arm (20) is translated from the first position toward the second position; and
one or more braking element (40a, 40b) configured to engage the engagement surface (36a, 36b) of the braking arm (20) to exert the engagement force on the engagement surface (36a, 36b).

2. The door brake (10) according to claim 1, wherein the braking arm (20) includes a width and the braking arm is configured to increase the width between the first end (22) and the second end (24) of the braking arm.

3. The door brake (10) according to any of claims 1-2, wherein the engagement surface (36a, 36b) of the braking arm (20) is included at an angle relative to the axis (A-A) and the angle of the engagement surface is included within a range between 1° and 30°.

4. The door brake (10) according to any of claims 1-3, wherein the engagement surface (36a, 36b) of the braking arm (20) includes one or more of a plurality of projections and a plurality of depressions.

5. The door brake (10) according to any of claims 1-4, wherein the braking arm (20) includes a stop member (32a, 32b) oriented at or adjacent to the first end (22) of the braking arm configured to prevent translation of the braking arm.

6. The door brake (10) according to any of claims 1-5, wherein the braking arm (20) includes a fastening member (34) oriented at or adjacent to the second end (24) of the braking arm configured to secure the braking arm to at least a portion of a vehicle (100).

7. The door brake (10) according to any of claims 1-6, wherein the braking element (40a, 40b) includes a braking pad (42) configured to engage the engagement surface (36a, 36b) of the braking arm (20).

8. The door brake (10) according to claim 7, wherein the braking element (40a, 40b) includes a bias member (44) configured to bias the braking pad (42) of the braking element toward the engagement surface (36a, 36b) of the braking arm (20).

9. The door brake (10) according to any of claims 1-8, comprising a support element (60) configured to receive the braking arm (20), wherein the braking arm is configured to be translated between the first position and the second position relative to the support element.

10. The door brake (10) according to claim 9, wherein the support element (60) is configured to mount the braking element (40a, 40b).

11. The door brake (10) according to any of claims 1-10, wherein the braking arm (20) includes at least a first engagement surface (36a) and a second engagement surface (36b).

12. The door brake (10) according to claim 11, wherein the first engagement surface (36a) of the braking arm (20) is oriented substantially opposite the second engagement surface (36b) of the braking arm about the axis (A-A).

13. The door brake (10) according to any of claims 11-12, comprising a first braking element (40a) and a second braking element (40b), wherein the first braking element is configured to engage the first engagement surface (36a) of the braking arm (20) and the second braking element is configured to engage the second engagement surface (36b) of the braking arm.

14. A vehicle (100) comprising:
a door (120); and
the door brake (10) according to any of claims 1-13.

15. A method of regulating a speed of a door (120) of a vehicle (100), the method comprising:
providing the door brake (10) according to any of claims 1-13; and
opening the door (120) of the vehicle (100).
